(19) Europäisches Patentamt
European Patent Office
Office européen des brevets

(11) EP 4 764 444 A1

(12) EUROPEAN PATENT APPLICATION

(43) Date of publication:
24.06.2026 Bulletin 2026/26

(21) Application number: 24386143.2

(22) Date of filing: 18.12.2024

(51) International Patent Classification (IPC):
G01M 11/08 (2006.01)   G02B 6/255 (2006.01)

(52) Cooperative Patent Classification (CPC):
G01M 11/088; G01M 11/081; G02B 6/02366;
G02B 6/2553

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Microsoft Technology Licensing, LLC
Redmond, WA 98052-6399 (US)

(72) Inventors:
• Bakhtiari Gorajoobi, Shahab
  Redmond, WA 98052 (US)
• Papadimopoulos, Athanasios
  Redmond, WA 98052 (US)
• Fatobene Ando, Ron
  Redmond, WA 98052 (US)

(74) Representative: CMS Cameron McKenna Nabarro
Olswang LLP
Cannon Place
78 Cannon Street
London EC4N 6AF (GB)

(54) HOLLOW-CORE FIBRE SPLICE LOSS ESTIMATION

(57)     There is described herein a method for estimating splice loss in optical fibres, comprising the steps of: acquiring one or more side-view images of a splice between two fibres; processing the acquired images to extract features indicative of splice quality; extracting features from the processed images that are indicative of potential splice loss; inputting the extracted features into a machine learning (ML) model trained to estimate splice loss; generating an estimated splice loss value from the ML model based on the input features; and outputting the estimated splice loss.

FIG. 3

**Description**

BACKGROUND

The telecommunications industry relies heavily on fibre optic technology for high-speed data transmission. Hollow-core fibres (HCFs) are a type of microstructured optical fibre that guides light through a central gas filled core, surrounded by a cladding. This fibre structure is popular for a variety of advanced applications in data centres, long-haul communications, and high-precision sensing.

Splicing involves joining two fibre ends together to ensure continuous light transmission. Accurate alignment and splicing of HCFs helps to maintain the performance and reliability of optical networks. Conventional methods for estimating splice loss, which refers to the loss of signal power resulting from the splice, often involve direct measurement techniques. These techniques can be time-consuming, require specialised equipment, and may not provide real-time feedback, making them less efficient for large-scale or rapid deployment scenarios.

SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

There is described herein methods for estimating splice loss, which may be referred to interchangeably as "splice quality", in optical fibres, optionally hollow core fibres (HCFs), comprising the steps of: acquiring one or more side-view images of a splice between two fibres; processing the acquired images to extract features indicative of splice quality; extracting features from the processed images that are indicative of potential splice loss; inputting the extracted features into a machine learning (ML) model trained to estimate splice loss; generating an estimated splice loss value from the ML model based on the input features; and outputting the estimated splice loss.

The estimated splice loss may then be displayed on a screen as a number and/or a pass/fail and/or a good/bad reading to a user such as an engineer. This informs the user as to whether the splice may be kept, or broken and respliced. The arrangement may be configured to automatically break and re-splice the fibres if the estimated splice loss exceeds a predetermined threshold. This automation enhances the efficiency and reliability of the splicing process, reducing the need for manual intervention and ensuring higher quality splices. The automatic re-splicing process can be controlled through an integrated feedback mechanism that continuously monitors and evaluates the quality of the splices, thereby improving the overall performance of an optical fibre network. The feedback mechanism may work in conjunction with the ML model to provide real-time adjustments during the splicing process. In one example, if a splice is deemed suboptimal according to a predetermined threshold, the arrangement automatically initiates a re-splicing operation by precisely realigning the fibre ends and applying the necessary fusion parameters. This iterative process continues until the splice quality meets the acceptable standards set by the system. Additionally or alternatively, the arrangement may log each splice event, including the estimated splice loss values, actions taken, and final outcomes. These logs can be used for further analysis and improvement of the splicing procedures, enabling predictive maintenance and reducing downtime. The logged data can also provide data for refining the ML model, enhancing its accuracy and efficiency over time.

As the demand for high-performance optical networks grows, there is an increasing need for efficient and accurate methods to estimate splice loss, ensuring optimal performance of fibre optic systems. This necessitates the development of advanced techniques that can predict splice loss with high precision, aiding in the installation and maintenance of HCF networks.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

Figure 1A shows an exemplary HCF structure;
Figure 1B shows two rotationally misaligned HCFs;
Figures 2A-2C show a series of side-view images of HCF splices;
Figure 3 shows one example of a splice loss estimation architecture;
Figure 4 shows a further example of a splice loss estimation architecture;
Figure 5 shows a further example of a splice loss estimation architecture; and
Figure 6 shows an exemplary computing-based device in which embodiments of the arrangement disclosed herein are implemented.

Like reference numerals are used to designate like parts in the accompanying drawings.

DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

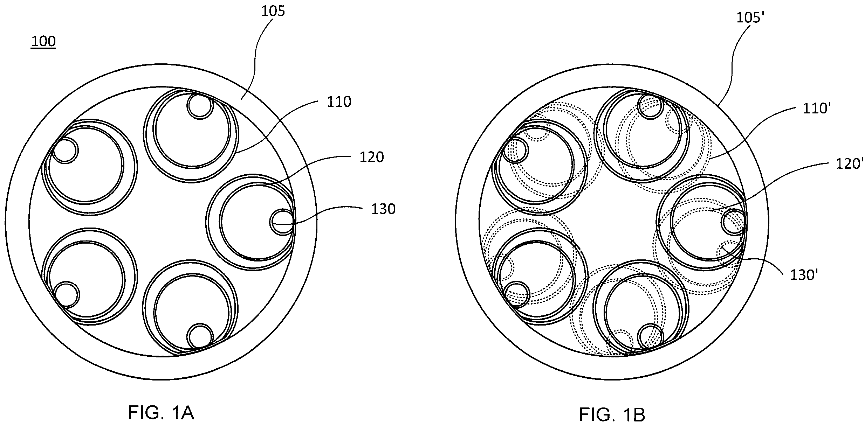

Figure 1A shows an exemplary HCF structure 100. There is shown in this figure a cross-sectional view of a hollow-core fibre structure 100, specifically a double nested anti-resonant nodeless fibre (DNANF). The outermost tube 105 represents the cladding tube, referred to as level 0. Inside the cladding tube 105, there are several nested hollow tubes 110, 120, 130 arranged in concentric circles when viewed cross sectionally. Each circle represents a different level of tubes: level 1, level 2, level 3, etc. The level 1 tubes 110 form the core of the fibre, where light is primarily guided. The structure can vary in terms of the number of these nested tubes and the size of the gaps between them. Optionally, the level 1 tubes 110 substantially enclose level 2 tubes 120, and further optionally the level 2 tubes 120 substantially enclose level 3 tubes 130. Although not shown in this figure, a different number of nested levels may be used.

The gaps and the alignment of these nested tubes are relevant factors in determining the overall splice loss. The spaces between the concentric circles represent the gaps between the nested tubes, which are relevant to the performance of the HCF.

Figure 1B shows two rotationally misaligned HCFs, viewed from an axial cross sectional perspective. Misalignment in an HCF can occur in various forms, impacting the efficiency and performance of the splice. Rotational misalignment occurs when the rotational orientation of the nested tubes in one fibre does not match the orientation in the other fibre. In this example, if the nested tubes 105, 110, 120, 130 in a first fibre are rotated relative to the nested tubes in a second fibre 105', 110', 120', 130', the tubes will not be aligned once spliced, leading to increased splice loss.

Other types of misalignment may occur when HCFs are spliced. Transverse misalignment refers to a lateral displacement where the centres of the fibre cores do not align. If the core of a first fibre is shifted horizontally and/or vertically relative to the core of a second fibre, when viewed from an axial perspective, the alignment of the nested tubes would be off-centre, resulting in higher splice loss.

Tilt misalignment occurs when two spliced fibres are angled relative to each other instead of being perfectly parallel. This results in the nested tubes in one fibre being tilted compared to the corresponding tubes in the other fibre, leading to imperfect alignment.

Misalignment of any kind disrupts the optimal pathway for light transmission through the fibre cores and nested tubes, significantly increasing splice loss. Proper alignment is important to ensure minimal splice loss and maintaining the high performance of hollow-core fibres in optical networks. Conventional misalignment corrections can involve meticulous adjustments and precise measurement techniques to align the fibres accurately during the splicing process.

Splice loss in HCFs may be influenced by various factors, all of which are affected by the mode-field mismatch between the fibres being spliced. Mode-field mismatch refers to the difference in the spatial electromagnetic field distributions and propagation constants of light modes between the two fibre cores. This mismatch can lead to inefficiencies in light transmission, resulting in splice loss. However, accurately determining the mode-field mismatch cannot be directly measured through simple physical observations or basic calculations. Instead, it requires detailed numerical simulations that model the behaviour of light within the fibre and their interactions at the splice. These simulations take into account the specific structural characteristics and optical properties of the fibres to provide a precise estimation of the mode-field mismatch, which is essential for accurately predicting the splice loss.

The core diameter $D_c$ of a DNANF corresponds to the diameter of the largest circle which can be inscribed to three level-1 tubes without intersecting any level-1 tube.

Regarding rotational misalignment, in the most general form, the splice loss $\alpha_{rot}$ as a function of the rotation misalignment angle $\varphi$ can be fitted using a Fourier Series:

$$\alpha_{\mathrm{rot}}(\varphi) = \sum_{m=0}^{M} A_m \cdot \cos(m[\varphi - \varphi_m])$$

The parameters $A_m$ and $\varphi_m$ are free parameters that need to be determined beforehand for the particular hollow-core fibre design.

Regarding fibre tilt, which refers to the angular misalignment between the ends of two fibres being spliced together, the following expression may be used:

$$\alpha_{\mathrm{tilt}} = \sum_{m=1}^{M} A_m \cdot \frac{(D_{c1} D_{c2})^2}{D_{c1}^2 + D_{c2}^2} \cdot \theta^{2m}$$

where $D_{c1}$ and $D_{c2}$ refer to the core diameters of fibre 1 and fibre2, respectively, and where $A_m$ and $\theta$ correspond to the fit parameters and tilt angle, respectively.

Regarding translational misalignment, which refers to the lateral displacement between the centers of the fibre cores in a splice, the following expression may be used:

$$\alpha_t = \sum_{m=1}^{M} A_m \cdot \frac{1}{(D_{c1}^2 + D_{c2}^2)} \cdot s^{2m}$$

Where $A_m$ represents the fit parameters and $s$ represents the transverse distance between the centres of the fundamental modes of both fibres, the fundamental mode being the primary light-carrying mode within the fibre core. In practice, the distance between the centres of the cores may be used.

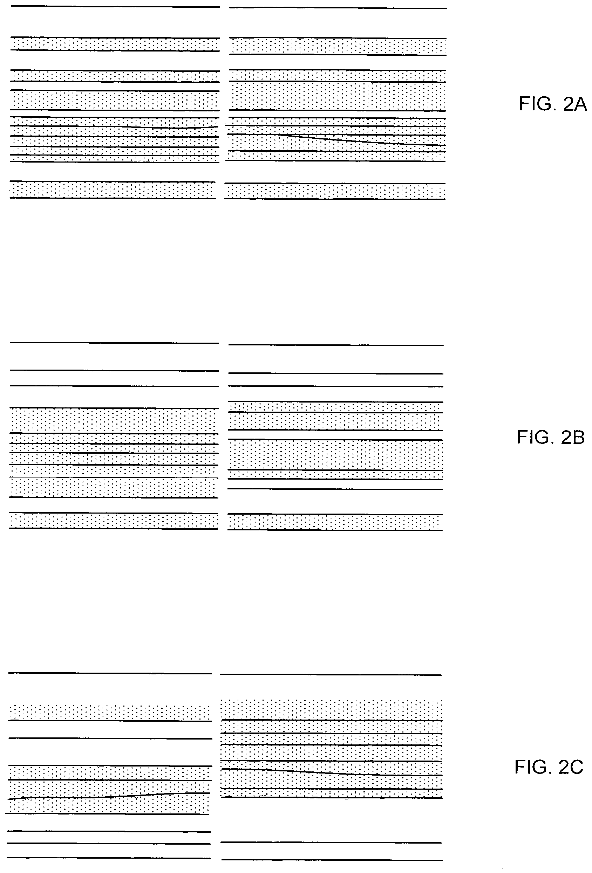

Figures 2A-2C show a series of side-view images of HCF splices, which demonstrate a portion of the process of estimating splice loss in HCFs using side-view images of the splices. Each image corresponds to a different splice loss value.

Figure 2A shows a relatively low loss splice indicating near-optimal alignment and minimal defects. The view shown provides a horizontal cross-section of the splice, revealing that the fibres are well-aligned horizontally, with the light and dark bands indicating the structure of the hollow-core fibre and the surrounding cladding being consistent, showing few visible defects or misalignment. This demonstrates the minimal splice loss in this particular splice.

Figure 2B shows a splice with moderate loss. In this view, there are shown slight misalignments or imperfections, visually represented as variations in the alignment of the light and dark bands, contributing to the increased splice loss compared to the first set. These imperfections are more pronounced than in the low-loss splice of Figure 2A but still relatively minor.

Figure 2C shows a splice with an even higher loss owing to significant defects or misalignment. There is shown in this view more noticeable misalignment or structural irregularities, with the light and dark bands appearing less consistent and more distorted, indicating a relatively poor splice quality. Were it to be measured, the higher splice loss would reflect these more substantial alignment issues.

The actual splice losses are experimentally measured in lab by standard method of measuring the transmitted power loss using a light source and power meter or using the method of Bi-directional Optical Time Domain Reflectometry.

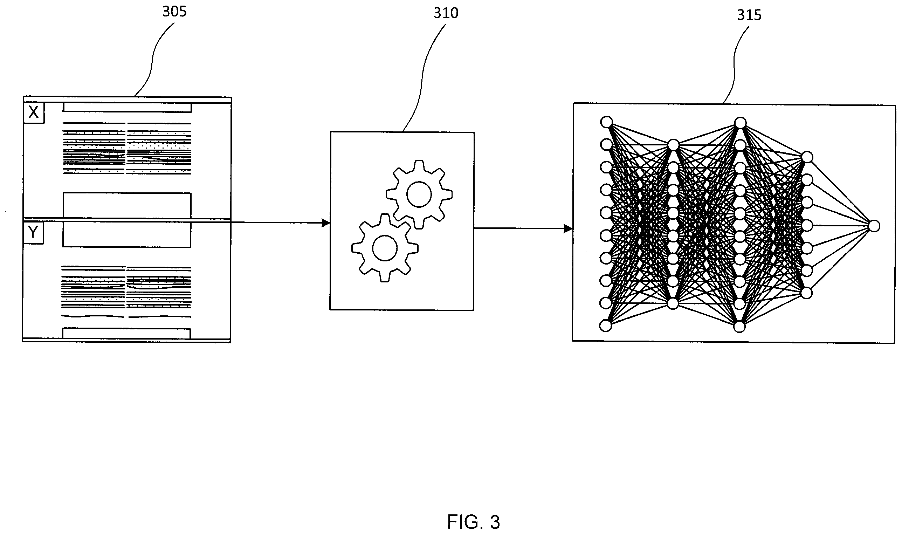

Figure 3 shows one example of a splice loss estimation architecture. In this example, there is illustrated the process of estimating splice loss in HCFs using image processing and a trained neural network. The process begins with the acquisition of splice images 305, similar to those shown in Figures 2A-2C.

The next operation in the process is image processing and preparation 310. In this stage, the captured splice images undergo one or more optional processing techniques to enhance their quality and extract relevant features. These processing techniques may include: noise reduction, contrast enhancement, and/or the identification of key structural elements such as core misalignment, fibre tilt, and/or rotational misalignment, Fourier Transform (FFT), summation, differentiation, etc. The output of this operation is a prepared image in a format that is suitable for analysis by a machine learning (ML) model such as Neural Networks (NNs). Although one or more deep neural networks (DNNs) may be used to explain the routines and procedures, other suitable machine learning methods may also be substituted. For example, the following types of machine learning may be used, either separately or in combination:

- Supervised Learning
- Unsupervised Learning
- Semi-Supervised Learning
- Reinforcement Learning

Similarly, the following neural network types may be used, either separately or in combination:

- Feedforward Neural Networks
- Convolutional Neural Networks (CNN)
- Recurrent Neural Networks (RNN)
- Long Short-Term Memory Networks (LSTM)
- Gated Recurrent Units (GRU)
- Radial Basis Function Networks (RBFN)
- Self-Organizing Maps (SOM)
- Deep Belief Networks (DBN)
- Generative Adversarial Networks (GAN)
- Autoencoders (AE)
- Siamese Neural Networks
- Capsule Networks (CapsNet)
- Transformer Networks
- Feedforward Neural Networks
- Convolutional Neural Networks (CNN)
- Recurrent Neural Networks (RNN)
- Long Short-Term Memory Networks (LSTM)
- Gated Recurrent Units (GRU)
- Radial Basis Function Networks (RBFN)
- Self-Organizing Maps (SOM)
- Deep Belief Networks (DBN)
- Generative Adversarial Networks (GAN)
- Autoencoders (AE)
- Siamese Neural Networks
- Capsule Networks (CapsNet)
- Transformer Networks

Once the images are processed and the features are extracted, the prepared data is input into a trained neural network 315. The neural network 315 is trained before use on a dataset of splice images and corresponding measured splice loss values. The DNN processes the input features through one or more layers of interconnected nodes, each layer learning to identify increasingly complex patterns. The output of the DNN is an estimated splice loss value, which is based on the input features extracted from the splice images. This estimated splice loss provides an indication of the quality of the splice, helping to identify potential issues that may need to be addressed.

The output of the system can be represented in many forms that can show the quality of the splice such as splice loss range, passed or failed splice, low, medium or high splice loss, etc.

The ML model can be trained to separate the estimated contribution of microstructure damage and misalignments. This can be achieved by comparing the estimated butt-coupled loss before splicing, and the estimated total splice loss after splicing in a splicing machine.

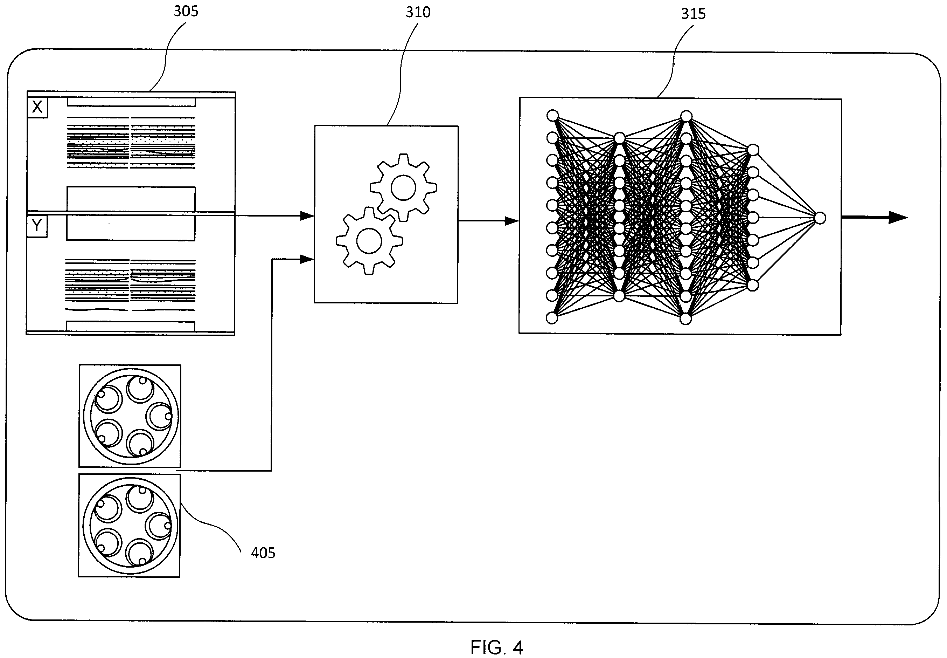

Figure 4 shows a further example of a splice loss estimation architecture. In this example, there is shown a process for estimating splice loss in HCFs using a combination of side-view and optionally also end-view images, processed through a trained neural network, optionally comprising a deep neural network (DNN).

The process begins with the acquisition of images from two perspectives: side views 305 and end views 405. The side views 305 are captured in two orientations, labelled as "X" and "Y", as described in relation to Figures 2A-2C. The end views 405 are images taken from the ends of the fibres, showing the arrangement of the microstructure within the hollow-core fibre. These images provide additional structural information that may not be visible in the side view images, such as the alignment and symmetry of the fibre cores and the gaps between the nested tubes.

Both sets of images are fed into an image processing stage, which then proceeds as in relation to Figure 3.

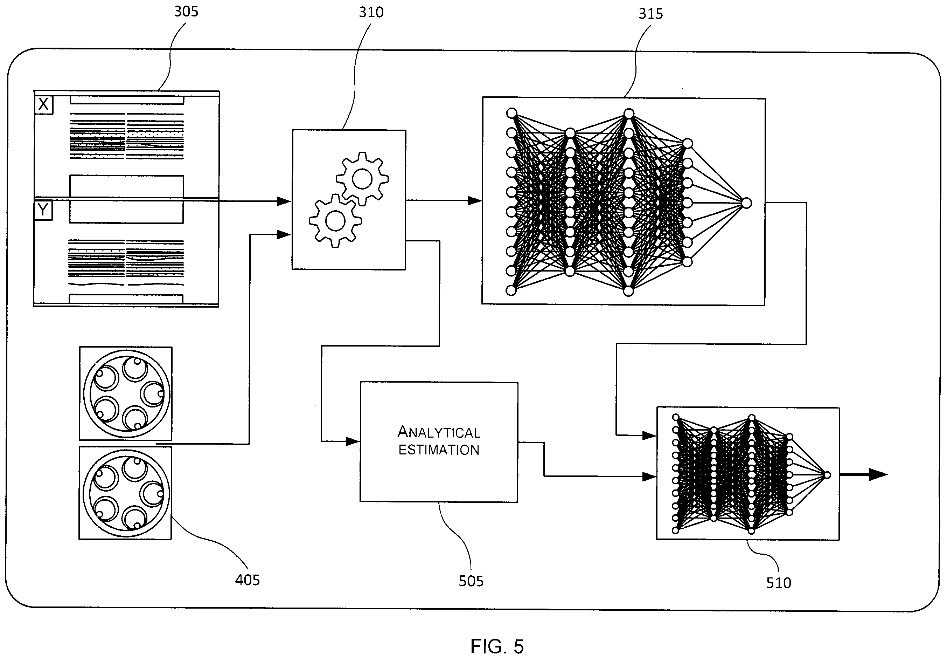

Figure 5 shows a further example of a splice loss estimation architecture. In this example, the process starts with the acquisition of images from two perspectives: side views 305 and end views 405. In some versions of the process, only side views 305 are used. These images provide detailed visual information about the alignment and structure of the splice in both horizontal and vertical planes.

The one or more sets of images are processed through an image processing stage 310, similar to that as described in relation to Figure 3. The processed images are first input into a first trained neural network 315, optionally comprising a DNN (referred to as "DNN1"). DNN1 then processes the input features to generate an initial estimated splice loss value. In parallel, the processed images are also fed into an analytical estimation module 505. This module applies mathematical models and equations based on the structural parameters of the HCFs to estimate the splice loss. This analytical estimation provides an additional perspective on the potential splice loss.

The outputs from both DNN1 315 and the analytical estimation module 505 are then combined and further processed by either a second deep neural network (referred to as "DNN2") 510 or through one or more additional mathematical operations (not shown). DNN2 510 is trained to combine the outputs from the first neural network and the analytical module to improve the accuracy of the splice loss estimation by considering multiple data sources and perspectives. Interchangeably, the output of DNN2 can be fed into DNN1 and the estimated splice quality can be output from DNN1. Moreover, the output of each DNN can take many forms such as an array of information extracted from the side or end-view images. Also, the aforementioned 2 DNNs can be combined into one DNN with more layers, in an effort to reduce the overall DNN back-propagation error.

The final output from DNN2 510 or the mathematical operations module is the estimated splice loss or quality. This value reflects a comprehensive assessment of the splice quality, incorporating information from both side-view and end-view images, as well as analytical predictions. This multi-faceted approach can provide a more accurate estimation of splice loss, aiding in the optimisation and maintenance of HCF networks.

Optionally, by subjecting the splice joint to additional heating and potential deformation through re-arcing, and misaligning the fibres during the splicing procedure, imperfections and misalignments can be introduced. This process generates a range of splice losses, including higher losses, which may be used for training and validating outputs from one or more machine learning models. Incorporating data from splices with varying levels of loss, especially those with artificially induced high losses, enables the machine learning models to accurately predict splice loss across a wide spectrum of conditions, enhancing their robustness and accuracy in real-world applications by increasing the volume of training data.

According to one example, there is provided a machine learning (ML) model for estimating splice loss in hollow-core fibres (HCFs), comprising: a trained deep neural network (DNN) configured to receive features extracted from one or more side-view images of a splice between two HCFs; the DNN trained using a dataset of splice images and corresponding measured splice loss values; and wherein the DNN generates an estimated splice loss value based on the input features.

Optionally, the DNN is configured to utilize the estimated splice loss with analytical expressions that account for specific hollow-core fibre design parameters.

Optionally, the DNN is further configured to receive features extracted from one or more end-view images of a splice between two HCFs.

According to one example, there is provided a method of training a machine learning (ML) model to estimate splice loss in hollow-core fibres (HCFs), comprising the steps of: acquiring a training dataset comprising a plurality of side-view images of splices between HCFs and corresponding measured splice loss values; processing the acquired images to extract features indicative of splice quality; training a deep neural network (DNN) using the extracted features and corresponding splice loss values; validating the trained DNN using a separate validation dataset; calibrating the DNN using analytical expressions based on hollow-core fibre design parameters; and optionally updating the DNN at predetermined intervals with new training data to improve accuracy and robustness in splice loss estimation.

Optionally, the training dataset further comprises a plurality of end-view images of splices between HCFs and corresponding measured splice loss values.

Optionally, the ML model can be trained on other types of optical fibres or waveguides such as tubular, nested antiresonant nodeless, solid-core, polarization maintaining, photonic crystal, photonic bandgap, multimode, graded index, active and doped fibres to estimate the splice quality of the same or different types of fibres.

The ML model can be trained to estimate the type of the fibres from the side and/or end view images.

The number of side view images is not limited to one or two angles. Using larger number of images obtained at various angles by either rotating the fibre or using more cameras/mirrors can improve the estimated splice loss accuracy.

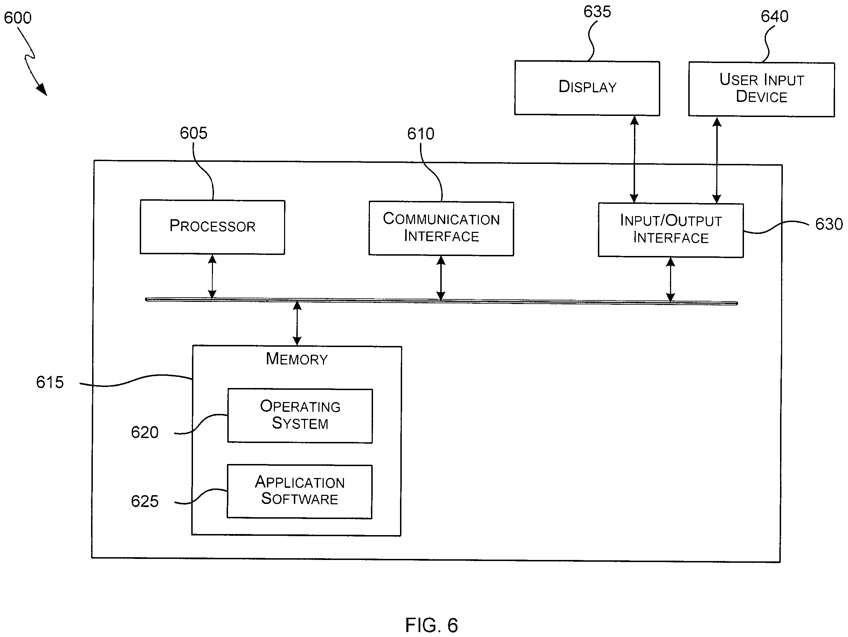

Figure 6 shows an exemplary computing-based device in which embodiments of the arrangement disclosed herein are implemented.

Alternatively, or in addition, the functionality described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

Figure 6 illustrates various components of an exemplary computing-based device 600 which are implemented as any form of a computing and/or electronic device, and in which embodiments of the arrangements disclosed herein are implemented in some examples.

Computing-based device 600 comprises one or more processors 605 which are microprocessors, controllers or any other suitable type of processors for processing computer executable instructions to control the operation of the device. In some examples, for example where a system on a chip architecture is used, the processors 605 include one or more fixed function blocks (also referred to as accelerators) which implement a part of the method in hardware (rather than software or firmware). Platform software comprising an operating system 620 or any other suitable platform software is provided at the computing-based device to enable application software 625 to be executed on the device.

The computer executable instructions are provided using any computer-readable media that is accessible by computing based device 600. Computer-readable media includes, for example, computer storage media such as memory 615 and communications media. Computer storage media, such as memory 615, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media is shown within the computing-based device 600 it will be appreciated that the storage is, in some examples, distributed or located remotely and accessed via a network or other communication link (e.g. using communication interface 610).

The computing-based device 600 also comprises an input/output controller 630 arranged to output display information to a display device 635 which may be separate from or integral to the computing-based device 600. The display information may provide a graphical user interface. The input/output controller 630 is also arranged to receive and process input from one or more devices, such as a user input device 640 (e.g. a mouse, keyboard, camera, microphone or other sensor). In some examples the user input device 640 detects voice input, user gestures or other user actions and provides a natural user interface (NUI). In one example, the display device 635 also acts as the user input device 640 if it is a touch sensitive display device. The input/output controller 630 outputs data to devices other than the display device in some examples, e.g. a locally connected printing device (not shown in this figure).

Any of the input/output controller 630, display device 635 and the user input device 640 may comprise NUI technology which enables a user to interact with the computing-based device in a natural manner, free from artificial constraints imposed by input devices such as mice, keyboards, remote controls and the like. Examples of NUI technology that are provided in some examples include but are not limited to those relying on voice and/or speech recognition, touch and/or stylus recognition (touch sensitive displays), gesture recognition both on screen and adjacent to the screen, air gestures, head and eye tracking, voice and speech, vision, touch, gestures, and machine intelligence. Other examples of NUI technology that are used in some examples include intention and goal understanding systems, motion gesture detection systems using depth cameras (such as stereoscopic camera systems, infrared camera systems, red green blue (RGB) camera systems and combinations of these), motion gesture detection using accelerometers/gyroscopes, facial recognition, three dimensional (3D) displays, head, eye and gaze tracking, immersive augmented reality and virtual reality systems and technologies for sensing brain activity using electric field sensing electrodes (electro encephalogram (EEG) and related methods).

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above.

Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification,

**Claims**

1. A method for estimating splice loss in optical fibres, comprising the steps of:

> acquiring one or more side-view images of a splice between two fibres;
> processing the acquired images to extract features indicative of splice quality;
> extracting features from the processed images that are indicative of potential splice loss;
> inputting the extracted features into a machine learning (ML) model trained to estimate splice loss;
> generating an estimated splice loss value from the ML model based on the input features; and
> outputting the estimated splice loss.

2. The method of claim 1, wherein the optical fibres are hollow-core fibres (HCFs).

**3.** The method of claim 1, wherein the acquired images further comprise one or more end view images.

**4.** The method of claim 1, wherein the step of processing the acquired images comprises one or more of: enhancing image contrast, filtering noise, and/or identifying one or more structural elements of the splice.

**5.** The method of claim 1, wherein the step of extracting features from the processed images comprises one or more of features relating to: core misalignment, rotational misalignment, transverse fibre misalignment, fibre tilt, and/or mode-field mismatch.

**6.** The method of claim 5, wherein the rotational misalignment is modelled using a Fourier Series.

**7.** The method of claim 1, wherein the ML model comprises a neural network (NN) model, optionally a deep neural network (DNN) model.

**8.** The method of claim 7, wherein the NN model has been trained using a dataset of splice images and corresponding measured splice loss values.

**9.** The method of claim 1, wherein the dataset comprises splice losses generated by applying additional misalignments or microstructure damage .

**10.** The method of any preceding claim, further comprising the step of:
calibrating the estimated splice loss using analytical expressions that account for specific hollow-core fibre design parameters, comprising one or more of: core diameter, number of nested tubes, and/or gap sizes between tubes.

**11.** The method of claim 1, wherein the generation of the estimated splice loss value further comprises the use of at least one analytical expression.

**12.** The method of claim 1, wherein the fibres comprise a nested arrangement of tubes surrounded by a cladding tube.

**13.** The method of claim 12, wherein the nested arrangement comprises at least three layers:

a first set of one or more tubes substantially enclosed by the cladding tube;
a second set of one or more tubes substantially enclosed by the first set; and
a third set of one or more tubes substantially enclosed by the second set.

**14.** A computer storage medium having computer-executable instructions that, when executed by a computing system, direct the computing system to estimate splice loss in optical fibres, by performing the steps of:

acquiring one or more side-view images of a splice between two fibres;
processing the acquired images to extract features indicative of splice quality;
extracting features from the processed images that are indicative of potential splice loss;
inputting the extracted features into a machine learning (ML) model trained to estimate splice loss;
generating an estimated splice loss value from the ML model based on the input features; and
outputting the estimated splice loss.

FIG. 1B

FIG. 1A

FIG. 2A

FIG. 2B

FIG. 2C

FIG. 3

FIG. 4

FIG. 5

FIG. 6

Europäisches Patentamt

European Patent Office

Office européen des brevets

# EUROPEAN SEARCH REPORT

**Application Number**

EP 24 38 6143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/062359 A1 (KIM WON YOUNG [KR]) 22 February 2024 (2024-02-22) * abstract * * figures 1-3,5-17 * * paragraphs [0005] - [0035], [0057] - [0191] * * claims 1-15 * ----- | 1-14 | INV. G01M11/08 G02B6/255 |
| X | DE 199 40 775 A1 (SIEMENS AG [DE]) 1 March 2001 (2001-03-01) * abstract * * figures 1-3 * * column 1, lines 1-13 * * column 1, line 42 - column 3, line 2 * * column 3, line 26 - column 5, line 25 * * claims 1-4,7,8-12 * ----- | 1-3,7,8, 11-14 | |
| A | CN 116 184 570 A (UNIV BEIJING TECHNOLOGY) 30 May 2023 (2023-05-30) * abstract * * figures 1-5 * * Contents of the invention * * Detailed ways * * claims 1-10 * ----- | 12,13 | TECHNICAL FIELDS SEARCHED (IPC) G01M G02B |

-/--

The present search report has been drawn up for all claims

| Place of search | Date of completion of the search | Examiner |
|---|---|---|
| The Hague | 22 May 2025 | Mouanda, Thierry |

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG BIAO ET AL: "Low-Loss and Weakly Coupled Eight-Mode Nodeless Hollow-Core Anti-Resonant Fiber With Three-Layer Nested Tubes in Each Cladding Unit", JOURNAL OF LIGHTWAVE TECHNOLOGY, IEEE, USA, vol. 43, no. 6, 26 November 2024 (2024-11-26), pages 2842-2850, XP034853550, ISSN: 0733-8724, DOI: 10.1109/JLT.2024.3507111 [retrieved on 2024-11-27] * abstract * * figures 1-4 * * II. FIBER STRUCTURE * * V. CONCLUSION * | 12,13 | |
| | ----- | | |
| | | | TECHNICAL FIELDS SEARCHED (IPC) |

The present search report has been drawn up for all claims

| Place of search | Date of completion of the search | Examiner |
|---|---|---|
| The Hague | 22 May 2025 | Mouanda, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                        
& : member of the same patent family, corresponding document

EPO FORM 1503 03.82 (P04C01)

page 2 of 2

**EP 4 764 444 A1**

## ANNEX TO THE EUROPEAN SEARCH REPORT
## ON EUROPEAN PATENT APPLICATION NO.

EP 24 38 6143

22-05-2025

| Patent document cited in search report | Publication date | Patent family member(s) | | Publication date |
|---|---|---|---|---|
| US 2024062359 A1 | 22-02-2024 | EP | 4325261 A1 | 21-02-2024 |
| | | KR | 20240023970 A | 23-02-2024 |
| | | US | 2024062359 A1 | 22-02-2024 |
| DE 19940775 A1 | 01-03-2001 | DE | 19940775 A1 | 01-03-2001 |
| | | WO | 0116632 A1 | 08-03-2001 |
| CN 116184570 A | 30-05-2023 | NONE | | |

EPO FORM P0459